(19) Europäisches Patentamt
European Patent Office
Office européen des brevets

(11) Veröffentlichungsnummer: **0 059 962**
B2

(12) # NEUE EUROPÄISCHE PATENTSCHRIFT

(45) Veröffentlichungstag der neuen Patentschrift: **14.06.89**

(51) Int. Cl.⁴: **C 08 G 18/10**, C 08 G 18/75, C 08 G 18/73, C 09 D 3/72

(21) Anmeldenummer: **82101772.0**

(22) Anmeldetag: **06.03.82**

(54) **Verwendung einer hitzehärtbaren Beschichtungsmasse für Steinschlagschutzschichten.**

(30) Priorität: **10.03.81 DE 3108953**

(43) Veröffentlichungstag der Anmeldung: **15.09.82 Patentblatt 82/37**

(45) Bekanntmachung des Hinweises auf die Patenterteilung: **21.08.85 Patentblatt 85/34**

(45) Bekanntmachung des Hinweises auf die Entscheidung über den Einspruch: **14.06.89 Patentblatt 89/24**

(84) Benannte Vertragsstaaten: **AT BE CH DE FR GB IT LI NL SE**

(56) Entgegenhaltungen:
EP-A- 0 004 597
EP-A- 0 013 890
DE-A- 1 644 813
DE-A- 2 014 859
DE-A- 2 131 299
DE-A- 2 902 090
DE-B- 2 131 299
FR-A- 1 496 956
US-A- 4 055 550

Bayer-Merkblatt "Desmodur BL 1100" Ausg.01.03.1981
BASF-Merkblatt "Laromin C 260" Ausg. Juli 1973
Lehrbuch der Lacke und Beschichtungen, Dr. H. Knittel, Bd.1, Teil 2, Verl. W.A. Colomb in der Hennemann GmbH Berlin-Oberschwandorf (1973), S. 579, 580

(73) Patentinhaber: **Herberts Gesellschaft mit beschränkter Haftung, Christbusch 25, D-5600 Wuppertal 2 (DE)**

(72) Erfinder: **Heinrich, Siegfried, Augustastrasse 84, D-5600 Wuppertal 1 (DE)**
Erfinder: **Heitzmann, Rudolf, Dr. Dipl.-Chem., Scheidtstrasse 49, D-5600 Wuppertal 21 (DE)**
Erfinder: **Stolzenbach, Heinrich, Dr. Dipl.-Chem., Kottsiepen 73, D-5600 Wuppertal 21 (DE)**

(74) Vertreter: **Türk, Gille, Hrabal, Bruckner Strasse 20, D-4000 Düsseldorf 13 (DE)**

(56) Entgegenhaltungen: (Fortsetzung)
**T. Anagnostou u. E. Jaul, J. Coat. Technol., Vol.53, No.673, S.35-45 (Febr. 1981)**

**Die Akte enthält technische Angaben, die nach dem Eingang der Anmeldung eingereicht wurden und die nicht in dieser Patentschrift enthalten sind.**

EP 0 059 962 B2

**Beschreibung**

Verwendung einer hitzehärtbaren Beschichtungsmasse zur Herstellung einer mit einer Lackschicht überzogenen Steinschlagschutzschicht.

Die vorliegende Erfindung betrifft die Verwendung einer hitzehärtbaren Beschichtungsmasse auf Basis von Ketoximblockierten NCO-Gruppen aufweisenden Vorpolymerisaten und Vernetzern aus der Gruppe bestimmter Amine für eine mit einer Lackschicht überzogene Steinschlagschutzschicht als Schicht eines Lackaufbaus mit mehreren Schichten an Kraftfahrzeugen.

Beschichtungsmassen, bestehend aus Vorpolymeren mit mindestens 2 blockierten Isocyanatgruppen und einem mittleren Molekulargewicht zwischen 500 und 25000, aliphatischen und/oder cycloaliphatischen und/oder aromatischen Aminen mit mindestens 2 primären und/oder sekundären Aminogruppen, stabilen wässrigen Polymerdispersionen und/oder wässrigen Polymerlösungen, sowie gegebenenfalls organischen Lösungsmitteln sind bekannt (DE-OS 2814079), derartige Beschichtungsmassen dienen vorzugsweise zur Beschichtung textiler Flächengebilde. Dies gilt auch für die aus der DE-OS 2902090 bekannten hitzehärtbaren Beschichtungsmassen enthaltend Ketoxim-blockierte aromatische NCO-Gruppen aufweisende Vorpolymerisate mit einem durchschnittlichen Molekulargewicht von 1000 bis 15000, einen Vernetzer der Formel

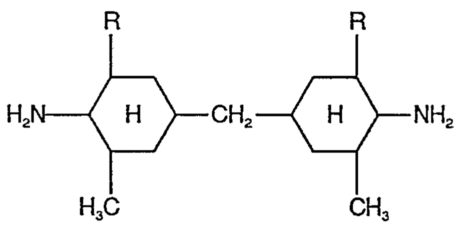
(I)

in welcher R für Wasserstoff oder eine Methylgruppe steht, sowie gegebenenfalls Pigmente, Füllstoffe, Treibmittel und weiter an sich bekannte Zusatzstoffe.

Diese bekannten Beschichtungsmassen haben den Nachteil, dass sie entweder nicht sehr reaktiv sind, d.h. hohe Einbrenntemperaturen benötigen, oder aber, wenn sie hoch reaktiv sind, eine unbefriedigende Lagerstabilität aufweisen. Die technische Informationsschrift der Bayer AG, Desmodur BL 1100 vom 1.3.1981 betrifft die Verwendung von aromatischen mit E-Caprolactam blockierten Isocyanaten und von 3,3'-Dimethyl-4,4'-diaminodicyclohexylmethan in Steinschlagschutzschichten.

Die DE-A 1644813 beschreibt die Herstellung von Einbrennlacken aus mit Ketoxim blockierten Isocyanaten und Diaminen, wie z.B. 4,4'-Diaminodicyclohexylmethan.

Der vorliegenden Erfindung liegt die Aufgabenstellung zugrunde eine hitzehärtbare Beschichtungsmasse zur Verwendung als Steinschlagschutzschicht zu finden, die eine hohe Lagerstabilität besitzt und gleichzeitig hoch reaktiv ist, d.h. bei relativ niedrigen Einbrenntemperaturen gehärtet werden kann.

Es wurde überraschenderweise gefunden, dass diese Aufgabenstellung gelöst werden kann, wenn die Beschichtungsmasse die nachfolgend definierten Komponenten enthält.

Gegenstand der vorliegenden Erfindung ist demgemäss die Verwendung einer hitzehärtbaren Beschichtungsmasse, bestehend aus

A) einem Vorpolymerisat mit einem durchschnittlichen Molekulargewicht von 500 bis 15000, das durchschnittlich 2 bis 6 ketoximblockierte NCO-Gruppen pro Molekül enthält, die über cycloaliphatische und/oder aliphatische Gruppen am Vorpolymerisat gebunden sind,

B) einem Vernetzer aus der Gruppe der Amine der Formel

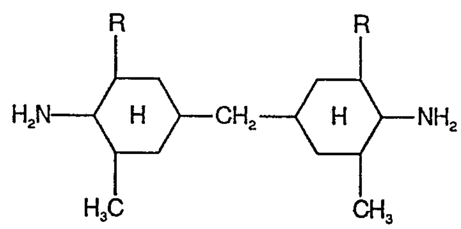
(I)

in welcher R für Wasserstoff oder eine Methylgruppe steht, 3(4), 8(9)-Bis(aminomethyl)-tricyclo [5.2.1.$0^{2,6}$] decan

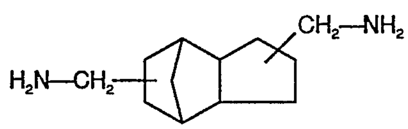
(II)

N,N'-Bisaminopropyl-diméthyl-hydantoin und

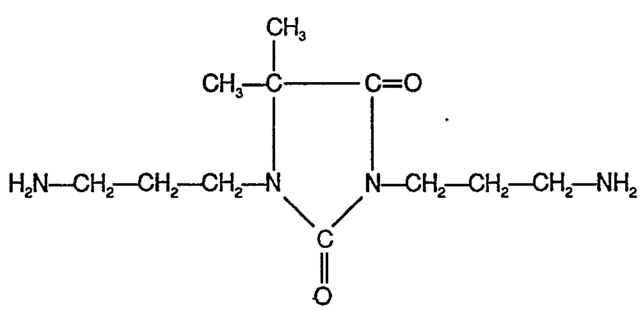
(III)

C) organischen Lösungsmitteln in einer Menge von 0 bis 50 Gew.-%, bezogen auf das Gesamtgewicht der Beschichtungsmasse,
D) gegebenenfalls Pigmenten, Füllstoffen, Treibmitteln und weiteren an sich bekannten Zusatzstoffen,
wobei das Äquivalentverhältnis von blockierten NCO-Gruppen der Komponente A) zu $NH_2$-Gruppen der Komponente B) zwischen 1,3:1 und 0,75:1 liegt zur Herstellung einer mit einer Lackschicht überzogenen Steinschlagschutzschicht als Schicht eines Lackaufbaus mit mehreren Schichten an Kraftfahrzeugen.

Als Aminine der Formel I werden vorzugsweise solche verwendet, in der R für Wasserstoff steht.

Geeignete cycloaliphatische und/oder aliphatische, NCO-Gruppen aufweisende, Polyisocyanate, wie sie zur Herstellung der Vorpolymerisate eingesetzt werden, sind 3-Isocyanatomethyl-3,5,5-trimethylcyclohexylisocyanat (IPDI), 4,4'-Diisocyanatodicyclohexylmethan (Desmodur W®), Hexamethylendiisocyanat (HDI), biuretgruppenhaltiges, trimerisiertes HDI (Desmodur N®), Trimethylhexamethylendiisocyanat. Für den Fachmann ist es offensichtlich, dass diese Aufzählungen nicht vollständig sind und ihm noch andere, insbesondere handelsübliche Isocyanate ähnlicher Isocyanate zur Verfügung stehen. Das Vorpolymerisat der Komponente A) ist bevorzugt das Ketoxim-blockierte Reaktionsprodukt von einem 2 bis 6 Hydroxylgruppen aufweisenden Polyether oder Polyester mit einem 2 oder 3 Isocyanatgruppen enthaltenden Isocyanat. Die obengenannten Polyisocyanate werden also beispielsweise mit Polyhydroxylverbindungen umgesetzt, die 2 bis 6, vorzugsweise 2 oder 3 Hydroxylgruppen aufweisen und ein Molekulargewicht von 62 (Glycol) bis etwa 5000 haben. Die untere Grenze für das Molekulargewicht liegt bevorzugt bei etwa 100, besonderes bevorzugt bei etwa 500, während die obere Grenze bevorzugt bei etwa 4000, besonders bevorzugt bei etwa 3000 liegt. Besonders geeignete derartige Polyhydroxylverbindungen sind z.B. Ethylenglycol und Homologe, Polypropylenglycol mit M = 134 bis 5000, Polyethylenglycol mit M = 106 bis 5000, Polyetherethylene und -propylene gestartet mit mehrfunktionellen Alkoholen z.B. Neopentylglycol, Trimethylolpropan, Glycerin, Sorbit usw., Polyester, wie beschrieben in «Lackkunstharz» von Wagner, Sarx, 1971, Kapitel 2.5, Seiten 86-147, sowie deren Kombinationen.

Weitere Beispiele für Polyhydroxylverbindungen sind Polyurethane, die erhalten werden können durch Umsetzung von beliebigen Polyisocyanaten mit Polyolen in einem solchen Mengenverhältnis, dass das Reaktionsprodukt keine freien Isocyanatgruppen enthält, sondern diese vollständig in dem Reaktionsprodukt einreagiert sind. Als reaktive Gruppen enthalten diese Polyurethane also nur Hydroxylgruppen. Die in diese Polyurethane einreagierten Polyisocyanate können aromatische, aliphatische und/oder cycloaliphatische Polyisocyanate sein. Als Polyhydroxylverbindungen können gemäss der Erfindung naturgemäss auch Gemische der verschiedensten Polyhydroxylverbindungen eingesetzt werden, und diese werden dann wie oben beschrieben mit den cycloaliphatische und/oder aliphatische NCO-Gruppen aufweisenden Polyisocyanaten zur Herstellung des Vorpolymerisats (A) umgesetzt.

Die Herstellung der Vorpolymerisate, welche freie NCO-Gruppen enthalten, erfolgt in an sich bekannter Weise dadurch, dass man die Polyisocyanate mit den Polyhydroxylverbindungen bei erhöhter Temperatur und gegebenenfalls unter Zusatz von geeigneten Katalysatoren umsetzt. Die Temperaturen liegen zweckmässig bei mindestens etwa 50°C, vorzugsweise mindestens etwa 75°C. Die obere Grenze liegt zweckmässig bei etwa 120°C, vorzugsweise bei etwa 100°C.

Das Verhältnis zwischen der Zahl der NCO-Gruppen und der Zahl der Hydroxylgruppen kann in verhältnismässig weiten Grenzen schwanken, wobei ein Überschuss an NCO-Gruppen vorhanden sein muss. Bevorzugt entfallen auf eine Hydroxylgruppe mindestens 1,4 besonders bevorzugt mindestens 1,6 NCO-Gruppen. Die obere Grenze liegt zweckmässig bei 3, bevorzugt bei 2,5, und unter bestimmten Bedingungen bei 2 NCO-Gruppen pro Hydroxylgruppe.

Die Umsetzung zwischen Polyisocyanat und Polyhydroxylverbindungen wird so lange durchgeführt, bis ein Vorpolymerisat mit der gewünschten NCO-Zahl erhalten wird. Die NCO-Zahl ist definiert in DIN 53 185.

Wie bereits dargelegt, besitzen die Vorpolymerisate 2 bis 6 NCO-Gruppen pro Molekül. Bevorzugt sind 2 bis 4, besonders bevorzugt 2 bis 3 NCO-Gruppen pro Molekül.

Die so erhaltenen freie NCO-Gruppen aufweisenden Vorpolymerisate werden in an sich bekannter Weise mit Ketoximen blockiert, wobei zweckmässig als Ketoxime eingesetzt werden Butanonoxim, Propanonoxim und Cyclohexanonoxim. Besonders bevorzugt ist Butanonoxim. Die Menge des zum Blockieren eingesetzten Ketoxims ist stöchiometrisch zur Menge der zu blockierenden NCO-Gruppen. Ein geringer Überschuss an Ketoxim ist zweckmässig, um eine vollständige Umsetzung zu gewährleisten. Zweckmässig beträgt der Überschuss nicht mehr als 20 Mol-%, bevorzugt nicht mehr als 10 Mol-%. Die Blockierung erfolgt, wie dies aus dem Stand der Technik bekannt ist, bei erhöhten Temperaturen von zweckmässig mindestens 50°C, bevorzugt mindestens 70°C und zweckmässig höchstens 120°C, bevorzugt höchstens 100°C.

Das Molekulargewicht der blockierten Vorpolymerisate liegt zweckmässig bei mindestens etwa 800, bevorzugt bei mindestens etwa 1000. Die obere Grenze liegt zweckmässig bei etwa 10000, bevorzugt bei etwa 5000.

Die Vorpolymerisate können in geeigneten organischen Lösungsmitteln gelöst sein, insbesondere dann, wenn sie eine sehr hohe Viskosität besitzen oder bei Raumtemperatur fest sind. Naturgemäss können nur solche Lösungsmittel eingesetzt werden, die gegenüber den Vorpolymerisaten und den Vernetzern chemisch indifferent sind. Beispiele sind Ester, z.B. Äthylacetat, Butylacetat usw., Glycolätherester, z.B. Methylglycolacetat, Äthylglycolacetat usw., Ketone, z.B. Butanon, Cyclohexanon usw., Terpenkohlenwasserstoffe, z.B. Depanol N IV® usw., aromatische Kohlenwasserstoffe, z.B. Xylol, Toluol usw.

Zweckmässig wird die Menge des Lösungsmittels so gewählt, dass beim Vermischen mit den anderen Komponenten der Gehalt an organischen Lösungsmittel, bezogen auf das Gesamtgewicht der hitzehärtbaren Beschichtungsmasse nicht über 40 Gew.-% bevorzugt nicht über 30 Gew.-% liegt.

Das Verhältnis zwischen blockiertem Vorpolymerisat, d.h. Komponente A, und Vernetzer, d.h. Diamin der Komponente B, ist zweckmässig etwa äquivalent. Es kann jedoch auch ein geringer Überschuss der einen oder anderen Komponente eingesetzt werden, wobei die obere Grenze für den jeweiligen Überschuss zweckmässig nicht über 20 Äquivalent-%, vorzugsweise nicht über 10 Äquivalent-% und besonders bevorzugt nicht über 5 Äquivalent-% liegt.

Die Beschichtungsmassen können gegebenenfalls Pigmente, Füllstoffe, Treibmittel und weitere an sich bekannte auf diesem Gebiet übliche lacktechnische Zusatzstoffe enthalten, z.B. Weichmacher. Die Härtung der erfindungsgemäss verwendeten Massen kann in an sich bekannter Weise durch Einwirkung von Wärme bzw. Infrarot-Strahlung erfolgen. Zur Reaktionsbeschleunigung können gegebenenfalls übliche Katalysatoren zugesetzt werden wie zinnorganische Verbindungen, tertiäre Amine, organische Titanate, zinkorganische Verbindungen, Lewis-Säuren, z.B. Bortrifluorid-Ätherat, quartäre Ammoniumsalze.

Wie bereits oben dargelegt, haben die erfindungsgemäss verwendeten Beschichtungsmassen den ausserordentlichen Vorteil, dass sie relativ schnell bei niedrigen Temperaturen aushärten, andererseits aber dennoch sehr lagerstabil sind. Die Aushärtung kann zweckmässig bei Objekttemperaturen von 100 bis 200°C erfolgen. Die obere Grenze liegt zweckmässig bei etwa 180°C, bevorzugt bei etwa 160°C. In der Regel sollte die Temperatur über etwa 120°C, bevorzugt über 130°C liegen.

Bindemittelsysteme, basierend auf blockiertem Isocyanat und aminischem Vernetzer nach dem Stand der Technik, mit solch hoher Reaktivität sind nicht genügend lagerstabil, d.h. sie erhöhen stark die Viskosität mit der Lagerzeit. Demgegenüber weisen die erfindungsgemässen Beschichtungsmassen eine sehr hohe Lagerstabilität auf, so dass nach 4wöchiger Lagerung bei Raumtemperatur keine wesentliche Viskosiätserhöhung beobachtet werden konnte.

Die Beschichtungsmasse enthält übliche Füllstoffe, Pigmente und sonstige Zusatzstoffe, wie sie auch schon oben teilweise erwähnt wurden. Da Steinschlagschutzschichten in der Regel in verhältnismässig grossen Schichtdicken von 30 µm bis 3 mm aufgetragen werden, ist es zweckmässig, dass die Beschichtungsmittel tixotropierende Mittel und Verdickungsmittel enthalten, um ein Ablaufen von senkrechten Flächen zu vermeiden.

Steinschlagschutzschicht stellt eine Schicht eines Lackaufbaus mit mehreren Schichten dar. Ein besonderer Vorteil der vorliegenden Erfindung liegt darin, dass die aufgebracht auf die Steinschlagschutzschicht an sich bekannte Lackschicht zusammen mit der Steinschlagschutzschicht in einem Arbeitsgang gehärtet werden kann.

Die Erfindung wird anhand der nachfolgenden Beispiele erläutert:

Harzlösung A

1500 g eines Polypropylenglycols (M etwa 1000 g/Mol) wird mit 89 g eines Polypropylentriols (M etwa 500 g/Mol) gemischt und mit 734 g 4,4'-Diisocyanato-dicyclohexylmethan bei 80°C umgesetzt. Anschliessend wird mit 191 g Butanonoxim bei 80°C verkappt. Das Material wird 80%ig in Äthylglycolacetat gelöst.

Harzlösung B

Für die Herstellung dieser Harzlösung wird folgende Rezeptur zugrunde gelegt:

1154 g Polypropylenglycol (M etwa 1000 g/Mol)
69 g Polypropylentriol (M etwa 500 g/Mol)
478 g 3-Isocyanatomethyl-3,5,5-trimethylcyclohexylisocyanat
147 g Butanonoxim

Die Verfahrensweise entspricht der von Harzlösung A.

Die so hergestellten Harzlösungen werden zur Formulierung von Beschichtungsmassen wie folgt eingesetzt:

Beispiel 1

54,0 Teile Harzlösung A
4,0 Teile 3,3'-Dimethyl-4,4'-diaminodicyclohexylmethan
0,5 Teile handelsübliches Verdickungsmittel (hochdisperse Kieselsäure)
0,2 Teile Russ
2,0 Teile Titandioxid
39,3 Teile Bariumsulfat

Beispiel 2

Wie Beispiel 1, jedoch äquivalenter Austausch der Vernetzerkomponente gegen 3(4),8(9)-Bis(aminomethyl)-tricyclo-[5.2.1.$0^{2.6}$]decan.

Beispiel 3

54,0 Teile Harzlösung B
4,9 Teile N,N'-Bisaminopropyl-dimethylhydantoin
0,5 Teile hochdisperse Kieselsäure
0,2 Teile Russ
2,0 Teile Titandioxid
38,4 Teile Bariumsulfat

Beispiel 4

49,7 Teile Harzlösung A

3,7 Teile 3,3'-Dimethyl-4,4'-diaminocyclohexylmethan

0,5 Teile handelsübliches Verdickungsmittel (Montmorillonit)

0,2 Teile Russ

1,8 Teile Titandioxid

36,1 Teile Bariumsulfat

8,0 Teile Dibutylphthalat als Weichmacher

Die Pigmentanteile werden in die anderen Bestandteile eindispergiert.

Die so erhaltenen Beschichtungsmassen wurden auf mit Elektrotauchlack beschichtete Stahlbleche appliziert (Spritzen, Streichen usw.) und 30 Minuten bei 160 °C gehärtet.

Die Prüfbleche wurden einem Steinschlagtest unterzogen, der nachfolgend beschrieben ist. Die Ergebnisse sind in Tabelle 1 zusammengefasst:

Tabelle 1

| Beispiel | Schichtstärke µm | Zeit Min. |
|---|---|---|
| 1 | 300 | 18 |
| 1 | 400 | 70 |
| 2 | 260 | 38 |
| 2 | 360 | 110 |
| 3 | 290 | 20 |
| 3 | 380 | 120 |
| 4 | 360 | 45 |
| 4 | 400 | 85 |

Beschreibung des Steinschlagtests

Zur Prüfung der Steinschlagfestigkeit solcher hochelastischer, dickschichtiger Beschichtungen sind die zur Zeit häufig verwendeten Steinschlag-Prüfgeräte nicht geeignet, da diese nicht kontinuierlich arbeiten und somit die Steinschlagbelastung für diese Beschichtungen zu gering ist. Für die Prüfung der erfindungsgemässen Beschichtungsmassen wurde daher ein Gerät verwendet, welches einen ähnlichen Aufbau hatte, wie das in «defazet, 32. Jahrgang, Nr. 6/1978, Seiten 234-243» beschriebene Gerät. Folgende Unterschiede zu letzterem wies das für die Prüfung verwendete Gerät auf:

a) das Gerät arbeitet kontinuierlich mit einem Umlauf von 300 bis 500 g Feinsplitt.

b) Schussmaterial ist Feinsplitt,

c) Schussleistung: 1,3 kg Feinsplitt pro Minute,

d) Luftdruck beträgt 0,75 bar,

e) Abstand Schusspistole: Prüfblech beträgt 20 cm,

f) Winkel des Prüfblechs zum Schussstrahl beträgt 90 Grad,

g) die belastete Fläche des Prüfbleches ist ein Kreis von ca. 5 cm Durchmesser.

Die Prüfbleche wurden in der Weise geprüft, dass die Zeit gemessen wurde, nach welcher erstmals der metallische Untergrund in einer Fläche von etwa 1 cm² freigelegt ist.

**Patentansprüche**

1. Verwendung einer hitzehärtbaren Beschichtungsmasse, bestehend aus

A) einem Vorpolymerisat mit einem durchschnittlichen Molekulargewicht von 500 bis 15000, das durchschnittlich 2 bis 6 ketoximblockierte NCO-Gruppen pro Molekül enthält, die über cycloaliphatische und/oder aliphatische Gruppen am Vorpolymerisat gebunden sind,

B) einem Vernetzer aus der Gruppe der Amine der Formel

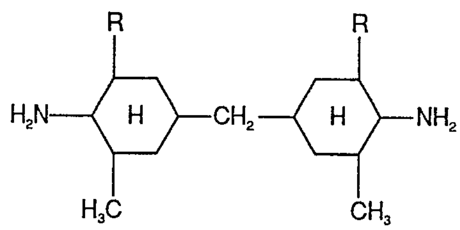

(I)

in welcher R für Wasserstoff oder eine Methylgruppe steht, 3(4),8(9)-Bis(aminomethyl)-tricyclo[5.2.1.0^{2,6}]decan

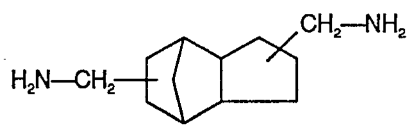

(II)

N,N'-Bisaminopropyl-dimethyl-hydantoin und

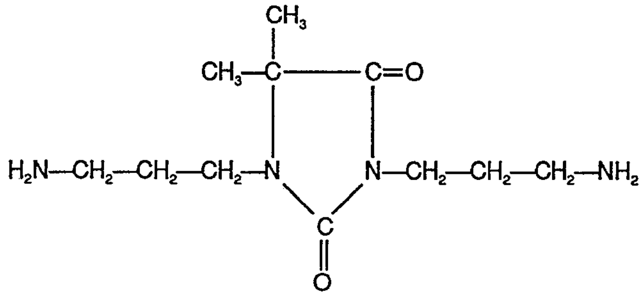

(III)

C) organischen Lösungsmitteln in einer Menge von 0 bis 50 Gew.-%, bezogen auf das Gesamtgewicht der Beschichtungsmasse,
D) gegebenenfalls Pigmenten, Füllstoffen, Treibmitteln und weiteren an sich bekannten Zusatzstoffen,
wobei das Äquivalentverhältnis von blockierten NCO-Gruppen der Komponente A) zu $NH_2$-Gruppen der Komponente B) zwischen 1,3:1 und 0,75:1 liegt, zur Herstellung einer mit einer Lackschicht überzogenen Steinschlagschutzschicht als Schicht eines Lackaufbaus mit mehreren Schichten an Kraftfahrzeugen.

**Revendications**

1. Utilisation d'une masse de revêtement thermodurcissable consistant en:

A) un prépolymère de poids moléculaire moyen 500 à 15000 contenant en moyenne par molécule 2 à 6 groupes NCO bloqués par des cétoximes et reliés au prépolymère par des groupes cycloaliphatiques et/ou aliphatiques,

B) un agent réticulant pris dans la classe des amines de formule

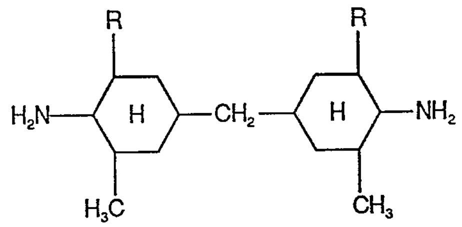
(I)

dans laquelle R représente l'hydrogène ou un groupe méthyle,
le 3(4), 8(9)-bis-(aminométhyl)-tricyclo-[5.2.1.0$^{2,6}$]-décane

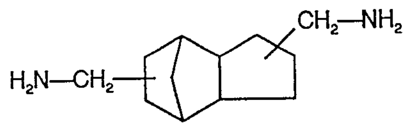
(II)

la N,N-bis-aminopropyl-diméthyl-hydantoine, et

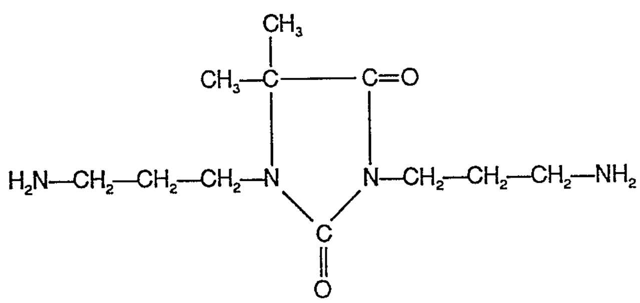
(III)

C) des solvants organiques en quantité de 0 à 50% en poids par rapport au poids total de la masse de revêtement,
D) le cas échéant des pigments, des matières de charge, des agents gonflants et d'autres additifs connus en soi, avec un rapport de 1,3:1 à 0,75:1 entre les équivalents de groupes NCO bloqués du composant A) et de groupes $NH_2$ du composant B), pour la préparation d'une couche de protection contre les projections de pierres couverte par une couche de peinture comme couche d'une structure de peinture comprenant plusieurs couches sur des véhicules.

2. Utilisation selon la revendication 1, caractérisé en ce que la couche de peinture appliquée sur la couche de protection contre les projections de pierres est durcie avec la couche de protection contre les projections de pierres.

**Claims**

1. Use of a thermally hardenable coating composition, consisting of

A) a prepolymer with an average molecular weight of from 500 to 15,000, which contains on average from 2 to 6 ketoxime-blocked NCO-groups per molecule, which are bound via cycloaliphatic and/or aliphatic groups to the prepolymer,
B) a cross-linking agent selected from the group of amines of the formula

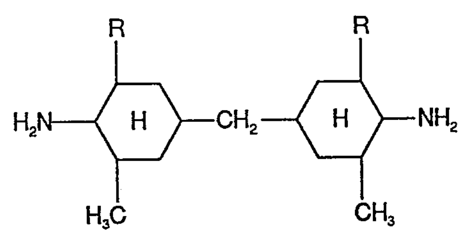
(I)

wherein
R represents hydrogen or a methyl group, 3(4),8(9)-bis(aminomethyl)-tricyclo[5.2.1.0$^{2.6}$] decane

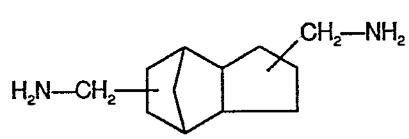
(II)

N,N'-bisaminopropyl-dimethyl-hydantoin, and

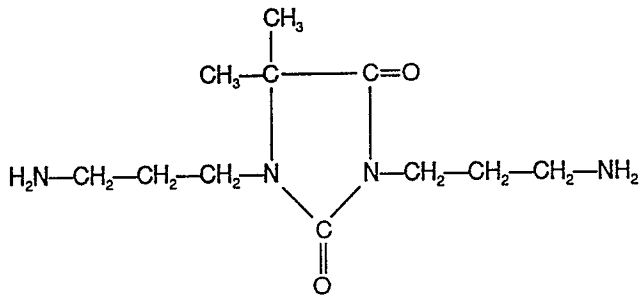

(III)

C) organic solvents in a quantity of from 0 to 50% by weight, based on the total weight of the coating composition,
D) optional pigments, fillers, blowing agents and further additives known per se,
the equivalent ratio of blocked NCO groups of the component A) to $NH_2$ groups of the component B) being between 1.3:1 and 0.75:1, for the preparation of a protective layer against stone chipping which is covered with a lacquer layer, as a layer of a lacquer formation with several layers on motor vehicles.

2. Use according to claim 1, characterised in that the lacquer layer which is applied to the protective layer against stone chipping is hardened together with the protective layer against stone chipping.